# EUROPÄISCHE PATENTANMELDUNG

(11) **EP 4 067 196 A1**
(43) Veröffentlichungstag der Anmeldung: **05.10.2022**
(21) Anmeldenummer: 22164061.8
(22) Anmeldetag: 24.03.2022
(51) Int. Cl.: B61F 5/30, B61F 5/32

(54) **FÜHRUNGSVORRICHTUNG FÜR FAHRWERKE, FAHRWERK UND VERFAHREN ZUR MONTAGE EINER FÜHRUNGSVORRICHTUNG IN EIN FAHRWERK**

(30) Priorität: 29.03.2021 AT 502222021
(71) Anmelder: Siemens Mobility Austria GmbH, 1210 Wien (AT)
(72) Erfinder: Weidenfelder, Thomas, 8103 Eisbach (AT); Kothgasser, Johann, 8020 Graz (AT); Mastnak, Johannes, 8151 Hitzendorf (AT); Steinbach, Harald, 8010 Graz (AT)
(74) Vertreter: Deffner, Rolf

(57) **Zusammenfassung**

Die Erfindung betrifft eine Führungsvorrichtung für Fahrwerke, insbesondere für Fahrwerke von Schienenfahrzeugen, insbesondere Radsatzführungsvorrichtung, umfassend eine Führungsbuchse (1) und einen in der Führungsbuchse (1) geführten und mit der Führungsbuchse (1) verbundenen Führungsbolzen (2), wobei die Führungsbuchse (1) zumindest über ein mit der Führungsbuchse (1) verbundenes, ringförmiges erstes Elastomerteil (3) mit einer ersten Fahrwerksstrukturkomponente (6) und der Führungsbolzen (2) mit einer zweiten Fahrwerksstrukturkomponente (7) verbindbar ist.

Es wird vorgeschlagen, dass das zumindest erste Elastomerteil (3) umfangsseitig mit der der ersten Fahrwerksstrukturkomponente (6) in Kontakt bringbar angeordnet ist und mit der Führungsbuchse (1) in Richtung einer Längsachse (8) der Führungsbuchse (1) verspannt ist.

Dadurch wird eine Montagevereinfachung bei zugleich sicherer Verbindung der Führungsvorrichtung mit der ersten Fahrwerksstrukturkomponente (6) ermöglicht.

## Beschreibung

Die Erfindung betrifft eine Führungsvorrichtung für Fahrwerke, insbesondere für Fahrwerke von Schienenfahrzeugen, insbesondere Radsatzführungsvorrichtung, umfassend eine Führungsbuchse und einen in der Führungsbuchse geführten und mit der Führungsbuchse verbundenen Führungsbolzen, wobei die Führungsbuchse zumindest über ein mit der Führungsbuchse verbundenes, ringförmiges erstes Elastomerteil mit einer ersten Fahrwerksstrukturkomponente und der Führungsbolzen mit einer zweiten Fahrwerksstrukturkomponente verbindbar ist.

Führungsvorrichtungen werden an verschiedenen Stellen in einem Fahrwerk eingesetzt, sind dynamisch teils stark belastete Bauteile und unterliegen mitunter starkem Verschleiß. Beispielsweise werden Radsätze eines Fahrwerks eines Schienenfahrzeugs über Radsatzlager, welche in Führungsbuchsen von Radsatzlagergehäusen angeordnet sind, in einem Fahrwerksrahmen geführt bzw. an den Fahrwerksrahmen gekoppelt. Weiterhin sind zwischen Radsatzlagergehäusen oder Schwingarmen eines Fahrwerks eines Schienenfahrzeugs und einem Fahrwerksrahmen häufig Radsatzführungsvorrichtungen mit Radsatzführungsbuchsen und Radsatzführungsbolzen vorgesehen.

Aus dem Stand der Technik zeigt beispielsweise die WO 2016/083009 A1 eine Radsatzführungseinrichtung eines Fahrwerks eines Schienenfahrzeugs, wobei Radsätze über Radsatzlager, Schwingarme und Schwingenlager mit einem Fahrwerksrahmen verbunden sind. Die Schwingenlager weisen Hülsen und in den Hülsen geführte Bolzen auf. Zwischen den Bolzen und den Hülsen sind, die Bolzen ummantelnd, ringförmige Elastomerschichten angeordnet, welche mit den Bolzen und den Hülsen verbunden sind.

Der genannte Ansatz weist in seiner bekannten Form den Nachteil auf, dass die Hülsen zur Montage in das Fahrwerk in Aufnahmen des Fahrwerksrahmens eingepresst oder eingeklebt sind.

Der Erfindung liegt daher die Aufgabe zugrunde, eine gegenüber dem Stand der Technik weiterentwickelte, einfach montier- und demontierbare sowie einstellbare Führungsvorrichtung anzugeben.

Erfindungsgemäß wird diese Aufgabe gelöst mit einer Führungsvorrichtung nach Anspruch 1, bei der das zumindest erste Elastomerteil umfangsseitig mit der ersten Fahrwerksstrukturkomponente in Kontakt bringbar angeordnet ist und mit der Führungsbuchse in Richtung einer Längsachse der Führungsbuchse verspannt ist.

Dadurch wird eine erhebliche Montage- und Demontagevereinfachung der Führungsvorrichtung erzielt. Zur Montage muss die Führungsvorrichtung lediglich in eine Aufnahme der ersten Fahrwerksstrukturkomponente eingesetzt werden. Danach wird die Führungsbuchse mit dem ersten Elastomerteil in Richtung der Längsachse der Führungsbuchse verspannt, wodurch das Elastomerteil in Richtung der Längsachse gestaucht wird und sich eine Kraft in radialer Richtung der Führungsbuchse auf die Aufnahme einstellt. Dadurch wird die Führungsvorrichtung in der Aufnahme verspannt. Ein Einpressen oder Einkleben der Führungsvorrichtung in die Aufnahme ist nicht erforderlich. Es sind daher keine stationären Montagevorrichtungen wie z.B. Auf- und Abpressvorrichtungen nötig. Die Führungsvorrichtung kann separat demontiert und montiert werden (z.B. zu deren Tausch), auf eine Demontage und Montage weiterer Bauteile oder Baugruppen des Fahrwerks, um eine Demontage und Montage der Führungsvorrichtung überhaupt erst zu ermöglichen, kann verzichtet werden.

Ein weiterer Vorteil der erfindungsgemäßen Führungsvorrichtung wird dadurch erzielt, dass ein Ausmaß der Verspannung des ersten Elastomerteils durch Aufbringung einer entsprechenden Spannkraft auf die Führungsbuchse flexibel einstellbar ist. Wird, je nach Einsatzzweck des Fahrwerks, eine in Richtung der Längsachse und in radialer Richtung der Führungsbuchse weiche Charakteristik bzw. geringe Steifigkeit benötigt, so kann das erste Elastomerteil mit einer geringen Spannkraft verspannt werden.

Ist eine in Richtung der Längsachse und in radialer Richtung der Führungsbuchse harte Charakteristik bzw. hohe Steifigkeit erforderlich, so kann das erste Elastomerteil mit einer großen Spannkraft verspannt werden.

Weitere vorteilhafte Ausgestaltungen der erfindungsgemäßen Führungsvorrichtung ergeben sich aus den Unteransprüchen.

Günstig ist es beispielsweise, wenn die Führungsbuchse zumindest ein erstes Buchsenteil und ein zweites Buchsenteil aufweist, die miteinander verspannt sind, wobei das zumindest erste Elastomerteil mittels des zumindest ersten Buchsenteils und des zweiten Buchsenteils verspannt ist.

In diesem Zusammenhang ist es auch hilfreich, wenn das zumindest erste Buchsenteil und das zweite Buchsenteil mittels in Bohrungen des zumindest ersten Buchsenteils und des zweiten Buchsenteils parallel zu der Längsachse angeordneter Schrauben miteinander verspannt sind.

Durch diese Maßnahmen wird ein einfacher und zugleich reversibler Verspannungsvorgang der Führungsvorrichtung ermöglicht. Auf spezielle Vorrichtungen bzw. Spezialwerkzeuge kann verzichtet werden. Bei den Schrauben kann auf Normteile zurückgegriffen werden. Es wird ein einfacher Tausch von Einzelteilen der Führungsbuchse (beispielsweise bei Schäden oder übermäßigem Verschleiß) ermöglicht.

Eine vorteilhafte Ausgestaltung erhält man ferner, wenn das zumindest erste Elastomerteil in eine erste Ausnehmung der Führungsbuchse lösbar eingesetzt ist.

Dadurch wird eine einfache Tauschbarkeit des ersten Elastomerteils bewirkt. Beispielsweise kann bei einer Wartung oder Instandhaltung der Führungsvorrichtung das erste Elastomerteil separat getauscht werden, während die Führungsbuchse, der Führungsbolzen etc. weiterverwendet werden können.

Günstig ist es, wenn eine zweite Ausnehmung zumindest des ersten Elastomerteils mit einem ersten Bund der ersten Fahrwerksstrukturkomponente formschlüssig verbindbar ist.

Es kann aber auch hilfreich sein, wenn mit dem zumindest ersten Elastomerteil, die Führungsbuchse ummantelnd, ein mit der ersten Fahrwerksstrukturkomponente verbindbarer erster Sicherungsring verbunden ist.

Eine vorteilhafte Lösung wird auch erreicht, wenn das zumindest erste Elastomerteil mittels eines mit der ersten Fahrwerksstrukturkomponente verbindbaren Deckels eingeklemmt ist.

Hilfreich kann es jedoch auch sein, wenn das zumindest erste Elastomerteil zwischen ersten Schultern der ersten Fahrwerksstrukturkomponente einklemmbar ist.

Durch diese Maßnahmen wird ein Verrutschen oder Wandern des ersten Elastomerteils in Richtung der Längsachse der Führungsbuchse, beispielsweise aufgrund von Mikroschlupf, vermieden.

Eine vorteilhafte Ausgestaltung erhält man, wenn die Führungsbuchse eine dritte Ausnehmung aufweist, in welcher eine erste Keilhülse und eine zweite Keilhülse, welche durch einen zweiten Bund des Führungsbolzen voneinander getrennt sind, den Führungsbolzen ummantelnd und die Führungsbuchse mit dem Führungsbolzen verspannend angeordnet sind.

Dadurch wird ein Beitrag zu einer modularen Bauweise der erfindungsgemäßen Führungsvorrichtung erreicht. Komponenten der Führungsvorrichtung sind tauschbar, die Führungsbuchse ist lösbar mit dem Führungsbolzen verbunden. Aufgrund der ersten Keilhülse und der zweiten Keilhülse wird eine sichere Verbindung zwischen der Führungsbuchse und dem Führungsbolzen bewirkt.

Günstig kann es auch sein, wenn das zumindest erste Elastomerteil mittels Vulkanisierung mit der Führungsbuchse und dem Führungsbolzen verbunden ist, wobei das zumindest erste Elastomerteil den Führungsbolzen ummantelt.

Durch diese Maßnahme kann auf der ersten Fahrwerksstrukturkomponente auf Vorrichtungen zur Sicherung des ersten Elastomerteils in Richtung der Längsachse der Führungsbuchse verzichtet werden. Jene mit dem ersten Elastomerteil verbundenen Komponenten der Führungsbuchse oder, bei einer einteiligen Führungsbuchse, die Führungsbuchse selbst, sowie der Führungsbolzen können bei Umsetzung dieser Maßnahme zwar nicht getrennt von dem ersten Elastomerteil getauscht bzw. bei Tausch des ersten Elastomerteils weiterverwendet werden, jedoch ist die Führungsvorrichtung als Ganzes nach wie vor mit geringem Aufwand in das Fahrwerk montierbar und aus diesem demontierbar.

Ein Verspannen des ersten Elastomerteils in Richtung der Längsachse der Führungsbuchse wird erleichtert, wenn die Führungsbuchse einen ersten Keilring, welcher das zumindest erste Elastomerteil in einem abgeschrägten ersten Anlegebereich des zumindest ersten Elastomerteils kontaktiert, und einen zweiten Keilring, welcher das zumindest erste Elastomerteil in einem abgeschrägten zweiten Anlegebereich des zumindest ersten Elastomerteils kontaktiert, aufweist.

In diesem Zusammenhang kann es jedoch auch hilfreich sein, wenn die Führungsbuchse einen ersten Flanschring, welcher das zumindest erste Elastomerteil in einem ersten Anlegebereich des zumindest ersten Elastomerteils kontaktiert, und einen zweiten Flanschring, welcher das zumindest erste Elastomerteil in einem zweiten Anlegebereich des zumindest ersten Elastomerteils kontaktiert, aufweist.

Durch diese Maßnahmen werden in die Führungsbuchse eingeleitete Spannkräfte über den ersten Keilring bzw. den ersten Flanschring und/oder den zweiten Keilring bzw. den zweiten Flanschring in das erste Elastomerteil übertragen. Der erste Keilring bzw. der erste Flanschring und der zweite Keilring bzw. der zweite Flanschring selbst können so einen großen Beitrag, der größer sein kann, als jener des ersten Elastomerteils, zu einer Verspannungswirkung der Führungsvorrichtung in der Aufnahme leisten.

Eine günstige Lösung wird erzielt, wenn die Führungsbuchse unmittelbar mit der ersten Fahrwerksstrukturkomponente verbindbar ist.

Dadurch wird über die von dem ersten Elastomerelement in radialer Richtung der Führungsbuchse auf die erste Fahrwerksstrukturkomponente übertragbare Kraft hinaus eine zusätzliche Sicherung der Führungsvorrichtung ermöglicht.

Es ist hilfreich, wenn ein Verhältnis zwischen einer Steifigkeit in Richtung der Längsachse und einer radialen Steifigkeit der Führungsvorrichtung über eine Geometrie des Führungsbolzens eingestellt ist, wobei insbesondere der Führungsbolzen einen dritten Bund aufweist, mit welchem eine vierte Ausnehmung zumindest des ersten Elastomerteils formschlüssig verbunden ist.

Durch diese Maßnahme wird eine hohe Flexibilität bei einer anwendungsbezogenen Auswahl von Steifigkeiten der Führungsvorrichtung erzielt.

Ein einfach umzusetzendes Verfahren zur Montage einer Führungsvorrichtung in ein Fahrwerk für Schienenfahrzeuge umfasst die Schritte
- Einsetzen der Führungsvorrichtung in eine Aufnahme einer ersten Fahrwerksstrukturkomponente, und
- Verspannen einer Führungsbuchse mit zumindest einem ersten Elastomerteil in Richtung einer Längsachse der Führungsbuchse in einer Weise, dass das zumindest erste Elastomerteil in der Aufnahme an die erste Fahrwerksstrukturkomponente angelegt wird und die Führungsvorrichtung in der Aufnahme mit der ersten Fahrwerksstrukturkomponente verspannt wird.

Mangels Einpressvorgang kann bei der Montage der erfindungsgemäßen Führungsvorrichtung durch diese Maßnahme auf stationäre Pressvorrichtungen verzichtet werden.

Nachfolgend wird die Erfindung anhand von Ausführungsbeispielen näher erläutert.

Es zeigen beispielhaft:
- Fig. 1:: Einen Seitenriss einer beispielhaften ersten Ausführungsvariante einer erfindungsgemäßen Führungsvorrichtung in geschnittener Darstellung mit einem lösbar in eine Führungsbuchse eingesetzten ersten Elastomerteil,
- Fig. 2:: Einen Schrägriss einer beispielhaften zweiten Ausführungsvariante einer erfindungsgemäßen Führungsvorrichtung in geschnittener Darstellung mit einem mit einer Führungsbuchse und einem Führungsbolzen vulkanisierten ersten Elastomerteil, und
- Fig. 3:: Ein Flussdiagramm zu einer beispielhaften Ausführungsvariante eines erfindungsgemäßen Verfahrens zur Montage einer erfindungsgemäßen Führungsvorrichtung in ein Fahrwerk eines Schienenfahrzeugs.

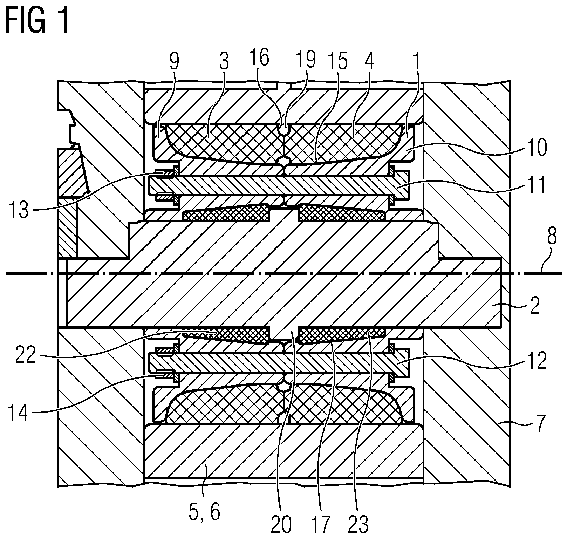

Fig. 1 zeigt einen Seitenriss einer beispielhaften ersten Ausführungsvariante einer erfindungsgemäßen Führungsvorrichtung in geschnittener Darstellung. Die Führungsvorrichtung ist als Radsatzführungsvorrichtung eines Fahrwerks eines Schienenfahrzeugs ausgebildet und umfasst eine Führungsbuchse 1, welche als Radsatzführungsbuchse aus Stahl ausgeführt ist, und einen als stählernen Radsatzführungsbolzen ausgebildeten Führungsbolzen 2. Erfindungsgemäß ist es auch vorstellbar, dass die Führungsbuchse 1 beispielsweise als Führungsbuchse 1 eines Radsatzlagers des Fahrwerks ausgebildet ist und in der Führungsbuchse 1 ein Radsatzlager angeordnet ist.

Die Führungsbuchse 1 ist über ein ringförmiges erstes Elastomerteil 3 und ein ringförmiges zweites Elastomerteil 4 mit einer Aufnahme 5 in einer als Längsträger eines Fahrwerksrahmens ausgeführten ersten Fahrwerksstrukturkomponente 6 verspannt, das erste Elastomerteil 3 und das zweite Elastomerteil 4 kontaktieren die erste Fahrwerksstrukturkomponente 6. Der Führungsbolzen 2 ist mit einer als Schwingarm ausgebildeten, zweiten Fahrwerksstrukturkomponente 7 verschraubt. Über den Schwingarm ist ein in Fig. 1 nicht gezeigter Radsatz des Fahrwerks über ein in Fig. 1 ebenfalls nicht dargestelltes Radsatzlager und die Führungsvorrichtung an den Fahrwerksrahmen gekoppelt.

Mit der Führungsbuchse 1 sind das erste Elastomerteil 3 und das zweite Elastomerteil 4 verbunden, wobei das erste Elastomerteil 3 und das zweite Elastomerteil 4 umfangsseitig mit der ersten Fahrwerksstrukturkomponente 6 in Kontakt sind und mit der Führungsbuchse 1 in Richtung einer Längsachse 8 der Führungsbuchse 1 verspannt sind.

Die Führungsbuchse 1 weist ein ringförmiges erstes Buchsenteil 9 und ein ringförmiges zweites Buchsenteil 10 auf, die mittels in Bohrungen des ersten Buchsenteils 9 und des zweiten Buchsenteils 10 parallel zu der Längsachse 8 angeordneter Schrauben miteinander verspannt sind, wobei das erste Elastomerteil 3 und das zweite Elastomerteil 4 mittels des ersten Buchsenteils 9 und des zweiten Buchsenteils 10 vorgespannt sind. Zwischen dem ersten Buchsenteil 9 und dem zweiten Buchsenteil 10 sind eine erste Durchgangsschraube 11 mit einer ersten Mutter 13, eine zweite Durchgangsschraube 12 mit einer zweiten Mutter 14 sowie weitere Durchgangsschrauben mit weiteren Muttern in entsprechenden Bohrungen der Führungsbuchse 1 angeordnet.

Das erste Elastomerteil 3 und das zweite Elastomerteil 4 sind lösbar in eine umfangsseitige erste Ausnehmung 15 der Führungsbuchse 1 eingesetzt, wobei das erste Elastomerteil 3 im Bereich des ersten Buchsenteils 9 und das zweite Elastomerteil 4 im Bereich des zweiten Buchsenteils 10 angeordnet ist.

Durch Anziehen der ersten Durchgangsschraube 11, der zweiten Durchgangsschraube 12 und der weiteren Durchgangsschrauben wird die Führungsbuchse 1 mit dem ersten Elastomerteil 3 und dem zweiten Elastomerteil 4 in Richtung der Längsachse 8 verspannt, wodurch das erste Elastomerteil 3 und das zweite Elastomerteil 4 in Richtung der Längsachse 8 gestaucht werden und sich eine Kraft in radialer Richtung der Führungsbuchse 1 auf die erste Fahrwerksstrukturkomponente 6 bildet. Dadurch wird die Führungsvorrichtung mit der ersten Fahrwerksstrukturkomponente 6 verspannt.

Das erste Elastomerteil 3 und das zweite Elastomerteil 4 weisen umfangsseitig eine ringförmige zweite Ausnehmung 16 auf, welche mit einem ringförmigen ersten Bund 19 der ersten Fahrwerksstrukturkomponente 6 gepaart ist. Mittels der zweiten Ausnehmung 16 und des ersten Bunds 19 sind das erste Elastomerteil 3 und das zweite Elastomerteil 4 zusätzlich formschlüssig mit der ersten Fahrwerksstrukturkomponente 6 verbunden, das erste Elastomerteil 3 und das zweite Elastomerteil 4 sind so gegen Bewegungen relativ zu der ersten Fahrwerksstrukturkomponente 6 gesichert.

Bei der zweiten Ausnehmung 16 und dem ersten Bund 19 handelt es sich um eine günstige Lösung.

Erfindungsgemäß ist es jedoch auch denkbar, dass mit dem ersten Elastomerteil 3 und dem zweiten Elastomerteil 4, die Führungsbuchse 1 ummantelnd, ein mit der ersten Fahrwerksstrukturkomponente 6 verbundener erster Sicherungsring (z.B. ein Nutenring bzw. Seegerring) verbunden ist.

Ferner ist es vorstellbar, dass das erste Elastomerteil 3 und das zweite Elastomerteil 4 mittels eines mit der ersten Fahrwerksstrukturkomponente 6 verbundenen Deckels eingeklemmt sind.

Darüber hinaus ist es möglich, dass das erste Elastomerteil 3 und das zweite Elastomerteil 4 zwischen ersten Schultern oder Vorsprüngen der ersten Fahrwerksstrukturkomponente 6 eingeklemmt sind.

Das ersten Buchsenteil 9 und das zweite Buchsenteil 10 der Führungsbuchse 1 weisen umfangsseitig, dem Führungsbolzen 2 zugewandt, eine dritte Ausnehmung 17 auf, in welcher eine elastische erste Keilhülse 22 und eine elastische zweite Keilhülse 23, welche in einem Kunststoff ausgebildet sind, angeordnet sind. Die erste Keilhülse 22 ist von der zweiten Keilhülse 23, durch einen zweiten Bund 20 des Führungsbolzens 2 voneinander getrennt. Der zweite Bund 20 ist umfangsseitig auf dem Führungsbolzen 2 vorgesehen. Die erste Keilhülse 22 und die zweite Keilhülse 23 ummanteln den Führungsbolzen 2 und sind dem Führungsbolzen 2 und der Führungsbuchse 1, diese miteinander verspannend, zwischengeordnet.

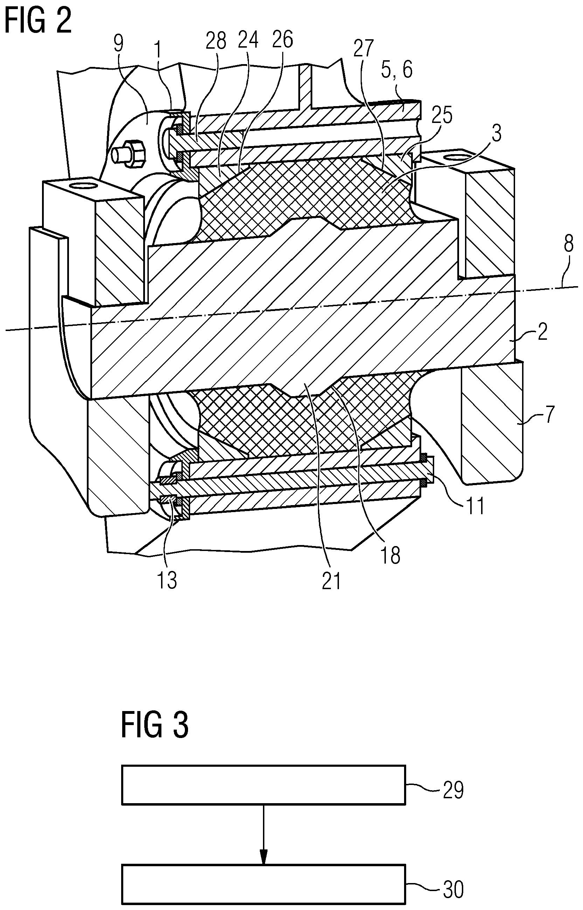

In Fig. 2 ist eine beispielhafte zweite Ausführungsvariante einer erfindungsgemäßen Führungsvorrichtung eines Fahrwerks eines Schienenfahrzeugs als Schrägriss in geschnittener Darstellung offenbart.

Wie jene beispielhafte erste Ausführungsvariante einer erfindungsgemäßen Führungsvorrichtung von Fig. 1 ist die Führungsvorrichtung gemäß Fig. 2 als Radsatzführungsvorrichtung ausgebildet, welche mit einer Aufnahme 5 in einer als Fahrwerksrahmen ausgeführten ersten Fahrwerksstrukturkomponente 6 verspannt und mit einer als Schwingarm ausgebildeten zweiten Fahrwerksstrukturkomponente 7, mittels welcher ein in Fig. 2 nicht gezeigter Radsatz des Fahrwerks an den Fahrwerksrahmen angekoppelt ist, verschraubt ist.

Im Unterschied zu der in Fig. 1 gezeigten ersten Ausführungsvariante einer erfindungsgemäßen Führungsvorrichtung weist die Führungsvorrichtung nach Fig. 2 nur ein ringförmiges erstes Elastomerteil 3 auf, welches mittels Vulkanisierung umfangsseitig mit einer Führungsbuchse 1 verbunden ist. Das erste Elastomerteil 3 ummantelt einen Führungsbolzen 2 und ist mit diesem ebenfalls mittels Vulkanisierung verbunden. Das erste Elastomerteil 3 ist demnach der Führungsbuchse 1 und dem Führungsbolzen 2 zwischengeordnet.

Die Führungsbuchse 1 umfasst einen ersten Keilring 24, welcher das erste Elastomerteil 3 in einem abgeschrägten ersten Anlegebereich 26 an einem ersten Rand des ersten Elastomerteils 3 kontaktiert, und einen zweiten Keilring 25, welcher das erste Elastomerteil 3 in einem abgeschrägten zweiten Anlegebereich 27 an einem zweiten Rand des ersten Elastomerteils 3 kontaktiert. Der erste Keilring 24 und der zweite Keilring 25 sind in einem weichen Stahl ausgebildet. Erfindungsgemäß ist es auch möglich, den ersten Keilring 24 und den zweiten Keilring 25 geschlitzt oder segmentiert etc. auszuführen.

Das erste Elastomerteil 3 ist in Bereichen des ersten Anlegebereichs 26 und des zweiten Anlegebereichs 27 mit der Führungsbuchse 1 vulkanisiert.

Erfindungsgemäß ist es auch weiterhin vorstellbar, dass das erste Elastomerteil 3 von einem ersten Flanschring und einem zweiten Flanschring kontaktiert wird. Hierbei weist das erste Elastomerteil 3 umfangseitig an dem ersten Rand und dem zweiten Rand Vertiefungen, welche den ersten Anlegebereich 26 und den zweiten Anlegebereich 27 bilden, auf, in welche der erste Flanschring und der zweite Flanschring eingesetzt sind. Ein mittlerer, außenumfangsseitiger Bereich des ersten Elastomerteils 3, in welchem der erste Keilring 24 und der zweite Keilring 25 oder der erste Flanschring und der zweite Flanschring das erste Elastomerteil 3 nicht kontaktieren, kontaktiert die erste Fahrwerksstrukturkomponente 6.

Die Führungsbuchse 1 weist weiterhin ein ringförmiges erstes Buchsenteil 9 auf, welches den ersten Keilring 24 sowie die erste Fahrwerksstrukturkomponente 6 stirnseitig kontaktiert. Der zweite Keilring 25 ist stirnseitig durch einen flanschartigen Abschnitt der ersten Fahrwerksstrukturkomponente 6 eingefasst.

Die Führungsbuchse 1 ist so unmittelbar mit der ersten Fahrwerksstrukturkomponente 6 verbunden.

In entsprechenden Bohrungen des ersten Buchsenteils 9 und der ersten Fahrwerksstrukturkomponente 6 sind eine erste Durchgangsschraube 11 mit einer ersten Mutter 13, eine Schaftschraube 28 sowie weitere Schrauben, teilweise mit weiteren Muttern, welche in Richtung einer Längsachse 8 der Führungsbuchse 1 ausgerichtet sind, angeordnet.

Über die erste Durchgangsschraube 11, die Schaftschraube 28 sowie die weiteren Schrauben ist die Führungsvorrichtung in Richtung der Längsachse 8 mit der ersten Fahrwerksstrukturkomponente 6 verspannt.

Aufgrund einer Klemmwirkung zwischen der ersten Fahrwerksstrukturkomponente 6, dem ersten Buchsenteil 9, dem ersten Keilring 24 und dem zweiten Keilring 25 sowie dem ersten Elastomerteil 3 ist das erste Elastomerteil 3 mit der Führungsbuchse 1 in Richtung der Längsachse 8 verspannt und ist gestaucht. Dadurch üben der erste Keilring 24, der zweite Keilring 25 und das erste Elastomerteil 3 eine Klemmkraft in radialer Richtung der Führungsbuchse 1 auf die erste Fahrwerksstrukturkomponente 6 aus, wodurch die Führungsvorrichtung in der ersten Fahrwerksstrukturkomponente 6 gehalten ist und Steifigkeitseigenschaften der Führungsvorrichtung in radialer Richtung der Führungsbuchse 1 beeinflusst sind. Der erste Keilring 24 und der zweite Keilring 25 leisten einen größeren Beitrag zu der Klemmkraft als das erste Elastomerteil 3.

Im Unterschied zu Fig. 1, in welcher eine Anordnung mit einem ersten Bund 19 und einem zweiten Bund 20 sowie einer ersten Ausnehmung 15, einer zweiten Ausnehmung 16 und einer dritten Ausnehmung 17 dargestellt ist, weist der Führungsbolzen 2 der Führungsvorrichtung gemäß Fig. 2 umfangsseitig einen keilförmigen bzw. trapezförmigen dritten Bund 21 auf, mit welchem eine keilförmige bzw. trapezförmige vierte Ausnehmung 18, welche innenumfangsseitig in dem ersten Elastomerteil 3 vorgesehen ist, formschlüssig verbunden ist. Dadurch ist ein Verhältnis zwischen einer Steifigkeit in Richtung der Längsachse 8 und einer radialen Steifigkeit der Führungsvorrichtung über eine Geometrie des Führungsbolzens 2 eingestellt.

Fig. 3 zeigt eine beispielhafte Ausführungsvariante eines Verfahrens zur Montage einer Führungsvorrichtung, wie sie beispielhaft in Fig. 1 dargestellt ist, in ein Fahrwerk eines Schienenfahrzeugs.

Zunächst wird die Führungsvorrichtung in eine in Fig. 1 gezeigte Aufnahme 5 einer ebenfalls in Fig. 1 dargestellten, als Fahrwerksrahmen ausgebildeten, ersten Fahrwerksstrukturkomponente 6 eingesetzt (Einsetzschritt 29). Danach werden ein erstes Buchsenteil 9 und ein zweites Buchsenteil 10 einer Führungsbuchse 1 mit einem ersten Elastomerteil 3 und einem zweiten Elastomerteil 4, welche ringförmig ausgebildet sind und die Führungsbuchse 1 umfangsseitig umgeben, in Richtung einer Längsachse 8 der Führungsbuchse 1 in einer Weise verspannt, dass das erste Elastomerteil 3 und das zweite Elastomerteil 4 in der Aufnahme 5 in radialer Richtung der Führungsbuchse 1 an die erste Fahrwerksstrukturkomponente 6 angelegt werden und die Führungsvorrichtung in der Aufnahme 5 mit der ersten Fahrwerksstrukturkomponente 6 verspannt wird (Verspannungsschritt 30).

Für eine Demontage der Führungsvorrichtung muss lediglich eine Vorspannung des ersten Elastomerteils 3 und des zweiten Elastomerteils 4 durch Lösen einer Verspannung des ersten Buchsenteils 9 und des zweiten Buchsenteils 10 reduziert oder aufgehoben werden. Danach kann die Führungsvorrichtung der Aufnahme 5 der ersten Fahrwerksstrukturkomponente 6 entnommen werden.

### Liste der Bezeichnungen

- 1: Führungsbuchse
- 2: Führungsbolzen
- 3: Erstes Elastomerteil
- 4: Zweites Elastomerteil
- 5: Aufnahme
- 6: Erste Fahrwerksstrukturkomponente
- 7: Zweite Fahrwerksstrukturkomponente
- 8: Längsachse
- 9: Erstes Buchsenteil
- 10: Zweites Buchsenteil
- 11: Erste Durchgangsschraube
- 12: Zweite Durchgangsschraube
- 13: Erste Mutter
- 14: Zweite Mutter
- 15: Erste Ausnehmung
- 16: Zweite Ausnehmung
- 17: Dritte Ausnehmung
- 18: Vierte Ausnehmung
- 19: Erster Bund
- 20: Zweiter Bund
- 21: Dritter Bund
- 22: Erste Keilhülse
- 23: Zweite Keilhülse
- 24: Erster Keilring
- 25: Zweiter Keilring
- 26: Erster Anlegebereich
- 27: Zweiter Anlegebereich
- 28: Schaftschraube
- 29: Einsetzschritt
- 30: Verspannungsschritt

## Patentansprüche

1. Führungsvorrichtung für Fahrwerke, insbesondere für Fahrwerke von Schienenfahrzeugen, insbesondere Radsatzführungsvorrichtung, umfassend eine Führungsbuchse (1) und einen in der Führungsbuchse (1) geführten und mit der Führungsbuchse (1) verbundenen Führungsbolzen (2), wobei die Führungsbuchse (1) zumindest über ein mit der Führungsbuchse (1) verbundenes, ringförmiges erstes Elastomerteil (3) mit einer ersten Fahrwerksstrukturkomponente (6) und der Führungsbolzen (2) mit einer zweiten Fahrwerksstrukturkomponente (7) verbindbar ist, **dadurch gekennzeichnet, dass** das zumindest erste Elastomerteil (3) umfangsseitig mit der ersten Fahrwerksstrukturkomponente (6) in Kontakt bringbar angeordnet ist und mit der Führungsbuchse (1) in Richtung einer Längsachse (8) der Führungsbuchse (1) verspannt ist.

2. Führungsvorrichtung nach Anspruch 1, **dadurch gekennzeichnet, dass** die Führungsbuchse (1) zumindest ein erstes Buchsenteil (9) und ein zweites Buchsenteil (10) aufweist, die miteinander verspannt sind, wobei das zumindest erste Elastomerteil (3) mittels des zumindest ersten Buchsenteils (9) und des zweiten Buchsenteils (10) verspannt ist.

3. Führungsvorrichtung nach Anspruch 2, **dadurch gekennzeichnet, dass** das zumindest erste Buchsenteil (9) und das zweite Buchsenteil (10) mittels in Bohrungen des zumindest ersten Buchsenteils (9) und des zweiten Buchsenteils (10) parallel zu der Längsachse (8) angeordneter Schrauben oder Bolzen miteinander verspannt sind.

4. Führungsvorrichtung nach einem der Ansprüche 1 bis 3, **dadurch gekennzeichnet, dass** das zumindest erste Elastomerteil (3) in eine erste Ausnehmung (15) der Führungsbuchse (1) lösbar eingesetzt ist.

5. Führungsvorrichtung nach Anspruch 4, **dadurch gekennzeichnet, dass** eine zweite Ausnehmung (16) zumindest des ersten Elastomerteils (3) mit einem ersten Bund (19) der ersten Fahrwerksstrukturkomponente (6) formschlüssig verbindbar ist.

6. Führungsvorrichtung nach Anspruch 4, **dadurch gekennzeichnet, dass** mit dem zumindest ersten Elastomerteil (3), die Führungsbuchse (1) ummantelnd, ein mit der ersten Fahrwerksstrukturkomponente (6) verbindbarer erster Sicherungsring verbunden ist.

7. Führungsvorrichtung nach Anspruch 4, **dadurch gekennzeichnet, dass** das zumindest erste Elastomerteil (3) mittels eines mit der ersten Fahrwerksstrukturkomponente (6) verbindbaren Deckels eingeklemmt ist.

8. Führungsvorrichtung nach Anspruch 4, **dadurch gekennzeichnet, dass** das zumindest erste Elastomerteil (3) zwischen ersten Schultern der ersten Fahrwerksstrukturkomponente (6) einklemmbar ist.

9. Führungsvorrichtung nach einem der Ansprüche 1 bis 8, **dadurch gekennzeichnet, dass** die Führungsbuchse (1) eine dritte Ausnehmung (17) aufweist, in welcher eine erste Keilhülse (22) und eine zweite Keilhülse (23), welche durch einen zweiten Bund (20) des Führungsbolzen (2) voneinander getrennt sind, den Führungsbolzen (2) ummantelnd und die Führungsbuchse (1) mit dem Führungsbolzen (2) verspannend angeordnet sind.

10. Führungsvorrichtung nach Anspruch 1, **dadurch gekennzeichnet, dass** das zumindest erste Elastomerteil (3) mittels Vulkanisierung mit der Führungsbuchse (1) und dem Führungsbolzen (2) verbunden ist, wobei das zumindest erste Elastomerteil (3) den Führungsbolzen (2) ummantelt.

11. Führungsvorrichtung nach Anspruch 10, **dadurch gekennzeichnet, dass** die Führungsbuchse (1) einen ersten Keilring (24), welcher das zumindest erste Elastomerteil (3) in einem abgeschrägten ersten Anlegebereich (26) des zumindest ersten Elastomerteils (3) kontaktiert, und einen zweiten Keilring (25), welcher das zumindest erste Elastomerteil (3) in einem abgeschrägten zweiten Anlegebereich (27) des zumindest ersten Elastomerteils (3) kontaktiert, aufweist.

12. Führungsvorrichtung nach Anspruch 10, **dadurch gekennzeichnet, dass** die Führungsbuchse (1) einen ersten Flanschring, welcher das zumindest erste Elastomerteil (3) in einem ersten Anlegebereich (26) des zumindest ersten Elastomerteils (3) kontaktiert, und einen zweiten Flanschring, welcher das zumindest erste Elastomerteil (3) in einem zweiten Anlegebereich (27) des zumindest ersten Elastomerteils (3) kontaktiert, aufweist.

13. Führungsvorrichtung nach einem der Ansprüche 10 bis 12, **dadurch gekennzeichnet, dass** die Führungsbuchse (1) unmittelbar mit der ersten Fahrwerksstrukturkomponente (6) verbindbar ist.

14. Führungsvorrichtung nach einem der Ansprüche 10 bis 13, **dadurch gekennzeichnet, dass** ein Verhältnis zwischen einer Steifigkeit in Richtung der Längsachse (8) und einer radialen Steifigkeit der Führungsvorrichtung über eine Geometrie des Führungsbolzens (2) eingestellt ist, wobei insbesondere der Führungsbolzen (2) einen dritten Bund (21) aufweist, mit welchem eine vierte Ausnehmung (18) zumindest des ersten Elastomerteils (3) formschlüssig verbunden ist.

15. Fahrwerk für Schienenfahrzeuge mit zumindest einer Führungsvorrichtung nach einem der Ansprüche 1 bis 14.

16. Verfahren zur Montage einer Führungsvorrichtung nach einem der Ansprüche 1 bis 14 in ein Fahrwerk für Schienenfahrzeuge, umfassend die Schritte
- Einsetzen der Führungsvorrichtung in eine Aufnahme (5) einer ersten Fahrwerksstrukturkomponente (6), und
- Verspannen einer Führungsbuchse (1) mit zumindest einem ersten Elastomerteil (3) in Richtung einer Längsachse (8) der Führungsbuchse (1) in einer Weise, dass das zumindest erste Elastomerteil (3) in der Aufnahme (5) an die erste Fahrwerksstrukturkomponente (6) angelegt wird und die Führungsvorrichtung in der Aufnahme (5) mit der ersten Fahrwerksstrukturkomponente (6) verspannt wird.
